# FASCICULE DE BREVET EUROPEEN

(11) **EP 3 218 538 B1**
(45) Date de publication et mention de la délivrance du brevet: **22.08.2018**
(21) Numéro de dépôt: 15798235.6
(22) Date de dépôt: 06.11.2015
(51) Int. Cl.: D04H 1/48, D04H 1/488, D04H 1/498, D04H 1/64, D04H 5/02, D04H 5/04, C08J 9/00, B32B 5/02, B32B 5/06, B32B 5/12, B32B 5/20, B32B 5/26, B32B 7/08, B32B 19/02, B32B 19/04, B32B 25/08, B32B 25/10, B32B 27/42, D04H 1/68, B32B 15/14, B32B 15/20

(54) **PANNEAU COMPOSITE A MATRICE THERMODURCISSABLE CELLULAIRE, PROCEDE DE FABRICATION ET STRUCTURE DE REVETEMENT DE PAROI FORMEE D'UN ASSEMBLAGE DE PANNEAUX.**
VERBUNDPLATTE MIT WÄRMEHÄRTBARER ZELLULARER MATRIX, HERSTELLUNGSVERFAHREN UND STRUKTUR ZUM VERKLEIDEN EINER WAND AUS EINER PLATTENANORDNUNG
COMPOSITE PANEL WITH THERMOSETTING CELLULAR MATRIX, MANUFACTURING METHOD, AND STRUCTURE FOR COVERING A WALL FORMED FROM AN ASSEMBLY OF PANELS

(30) Priorité: 14.11.2014 FR 1461005
(43) Date de publication de la demande: 20.09.2017
(73) Titulaire: Hutchinson, 75008 Paris (FR)
(72) Inventeur: LEROY, Fabien, F-45260 Lorris (FR); MAUGEY, Jérôme, F-37170 Chambray Les Tours (FR); BOU, Gérard, F-54000 Nancy (FR)
(74) Mandataire: Gevers & Orès
(86) Numéro de dépôt international: PCT/IB2015/058584
(87) Numéro de publication internationale: WO 2016/075602

(56) Documents cités:
- EP-A1- 2 801 477
- WO-A1-2011/101343
- WO-A1-2014/009381

## Description

La présente invention concerne un panneau composite à matrice thermodurcissable cellulaire, un procédé de fabrication de ce panneau et une structure de revêtement d'une paroi qui est formée d'un assemblage de tels panneaux et confère à la paroi une isolation thermique vis-à-vis de fluides cryogéniques et/ou une protection contre le feu et les flammes et/ou une étanchéité à ces fluides. L'invention s'applique en particulier à une telle structure pour revêtir une plateforme, un pont ou une coque d'une unité flottante de production de gaz liquéfié en offshore, et de manière plus générale à toute autre application par exemple dans le domaine aéronautique requérant l'une au moins des trois propriétés précitées d'isolation thermique. de protection et d'étanchèité.

De manière connue, on cherche à protéger de fuites ou de déversements accidentels de liquides cryogéniques (i.e. de gaz liquéfiés dont la température à l'état liquide est inférieure à -150° C comme par exemple les gaz de pétrole liquéfiés appelés GPL, ou le gaz naturel liquéfié) les ponts et coques d'unités flottantes de production de gaz liquéfiés en offshore, notamment lors des opérations de pompage, de traitement telles que des séparations, de liquéfaction, de stockage et de transbordement appliquées à ces liquides. En effet, on sait que les écoulements de liquides cryogéniques peuvent endommager les structures typiquement en acier utilisées dans les ponts et les coques de plateformes ou de navires par rupture fragile. C'est la raison pour laquelle on a développé par le passé des structures de revêtement des substrats des ponts et des coques protégeant ces substrats des écoulements de ces liquides, tant du point de vue de l'isolation thermique (pour éviter un refroidissement critique des substrats) que de l'étanchéité auxdits liquides.

On cherche également à conférer aux substrats de ces ponts et coques une résistance satisfaisante au feu, incluant une allumabilité réduite, une résistance à la propagation de flammes, une émissivité réduite de fumées et une isolation thermique (pour éviter un réchauffement critique des substrats).

Il est ainsi connu d'utiliser des structures de revêtement protectrices sous forme d'un assemblage de panneaux formant dallage sur ces substrats, ces panneaux étant par exemple constitués:
- d'une composition cellulaire de type mousse syntactique à base d'une matrice polymérique et de microsphères creuses injectées, avec comme inconvénients principaux une étanchéité aux fluides cryogéniques et une résistance mécaniques toutes deux insuffisantes,
- d'une composition plastique compacte de type thermodurcissable, avec comme inconvénients une modularité géométrique contraignante, un poids et un coût trop élevés, ou
- d'un composite fibré à matrice thermodurcissable cellulaire, comme notamment décrit dans le document commenté ci-après.

Ce document WO-A1-2014/009381 présente un panneau composite à matrice thermodurcissable expansée comprenant un support en fibres naturelles imprégné par cette matrice qui est à base d'une résine en base aqueuse et d'un agent d'expansion. Le support est formé d'un feutre qui est présenté comme comprenant de préférence des fibres courtes de basalte. étant précisé que la description de l'unique exemple de panneau fabriqué mentionne l'utilisation de fibres non pas courtes mais au contraire de fils continus de type « BCF » (i.e. « Basait Continuous Filaments »). Selon ce document, ce feutre est nécessairement aiguilleté sur ses deux surfaces par l'apport d'une fibre complémentaire thermoplastique en polyéthylène.

Un inconvénient majeur du panneau présenté dans ce document réside dans cet apport de fibres en polyéthylène qui est requis pour conférer une intégrité satisfaisante au feutre pour des grammages de ce dernier spécifiquement compris entre 480 et 780 g/m².

Cependant, on peut penser que cet apport de fibres en polyéthylène lors de l'aiguilletage du feutre en surface n'améliore pas significativement ses propriétés mécaniques, étant au contraire susceptible de générer un manque d'homogénéité dans le feutre se traduisant par sa masse surfacique localement variable ce qui, dans des domaines comme l'aéronautique, pose problème.

De plus, lors du chauffage du support fibré au moyen d'une presse chauffante lors de la troisième étape de réticulation et d'expansion de la résine thermodurcissable décrite dans ce document, l'on utilise une température de chauffage comprise entre 90 et 150° C et de préférence entre 135 et 145° C pour permettre à la fois une activation de l'agent d'expansion et la réticulation de la résine. Cependant, cette température de chauffage peut interférer négativement avec les fibres de polyéthylène apportées lors de l'aiguilletage antérieur, du fait qu'elle se situe dans la plage usuelle de température de fusion du polyéthylène (de 85 à 140° C) ce qui peut rendre ces fibres de polyéthylène totalement inutiles et entraîner des accumulations de polyéthylène fondu dans certaines zones du panneau.

Outre les inconvénients précités du panneau selon ce document qui sont directement liés à l'aiguilletage du support par ces fibres de polyéthylène, il apparaît que les propriétés mécaniques du panneau testé n'ont été améliorées que de manière relative, compte tenu de l'épaisseur élevée obtenue pour le panneau en relation avec sa masse volumique.

Un but de la présente invention est de proposer un panneau composite à matrice thermodurcissable cellulaire, le panneau comprenant au moins un support qui comprend des fibres courtes de basalte non tissées et qui est imprégné par ladite matrice, qui remédie aux inconvénients précités.

A cet effet, un panneau selon l'invention est tel que ledit au moins un support comprend plusieurs non-tissés superposés suivant une épaisseur de superposition, lesdits non-tissés comprenant chacun lesdites fibres courtes de basalte et étant aiguilletés dans ladite épaisseur sans apport de fibres thermoplastiques.

Par « non-tissé », on entend de manière connue dans la présente description une feuille manufacturée constituée d'un voile, d'une nappe, d'un feutre ou d'un matelas de fibres orientées dans une direction particulière ou au hasard, liées par friction et/ou cohésion et/ou adhésion, à l'exclusion du papier et des produits obtenus par tissage, tricotage, tuftage ou couturage.

Par non-tissés « aiguilletés », on entend de manière également connue leur consolidation mécanique par la technique d'aiguilletage, qui a pour effet de créer des ponts de fibres verticaux entre les différentes feuilles afin de les maintenir ensembles. Pour cette raison, l'aiguilletage ne peut s'appliquer qu'aux fibres de longueur suffisante, typiquement d'au moins 30 mm et en général d'au moins 40 mm, comme cela est le cas des fibres courtes de basalte utilisées dans ces non-tissés.

On notera que ce panneau de l'invention est ainsi caractérisé par l'empilement de plusieurs couches non tissées, telles que des feutres par exemple, qui comprennent ces fibres courtes de basalte de préférence à titre majoritaire ou exclusif (i.e. selon une fraction massique supérieure à 50 % et encore plus préférentiellement supérieure à 90 %, éventuellement de 100 %).

Selon une autre caractéristique de l'invention, lesdites fibres courtes de basalte incluses dans ou constituant chaque non-tissé peuvent présenter un diamètre moyen compris entre 13 µm et 16 µm et une longueur moyenne comprise entre 30 mm et 60 mm et de préférence entre 35 mm et 45 mm, étant précisé que ces fibres courtes de basalte utilisées dans la présente invention peuvent être rangées à la limite dans la catégorie « TBF » (Thin Staple Basait Fibers » en anglais), bien que leur diamètre moyen soit légèrement supérieur à celui des fibres « TBF » disponibles dans le commerce qui est usuellement compris entre 6 µm et 12 µm.

On notera que ces fibres de basalte de type « TBF » utilisables dans les non-tissés de la présente invention présentent notamment l'avantage de résister à des températures allant jusqu'à 1040° C sans être altérées.

On notera également que ne sont pas utilisables à titre de fibres courtes de basalte dans les non-tissés d'un panneau selon l'invention :
- les fibres de basalte de type « BCF » (« Basait Continuous Fibers » en anglais), i.e. des fibres continues de diamètre moyen usuellement compris entre 6 µm et 21 µm et de longueur moyenne très élevée typiquement comprise entre 40 km et 60 km, du fait que ces fibres « BCF » ne confèrent pas une tenue mécanique suffisante aux non-tissés superposés et requièrent, comme expliqué dans le document précité WO-A1-2014/009381, l'apport de fibres d'aiguilletage en polyéthylène, ni
- les fibres de basalte de type « STBF » (« Super Thin Basait Fibers » en anglais) de diamètre usuellement compris entre 1 µm et 3 µm et de longueur moyenne typiquement voisine de 50 mm, du fait que ces fibres de très faible diamètre ne s'accrochent pas suffisamment entre elles pour obtenir un non-tissé de type feutre et sont en outre nocives pour la santé.

On notera en outre que ces non-tissés selon l'invention présentent la particularité structurelle d'être aiguilletés ensemble et en profondeur à travers cet empilement et sans apport d'aucune fibre thermoplastique lors de l'aiguilletage, contrairement au document précité WO-A1-2014/009381 qui enseigne un aiguilletage des deux surfaces d'un unique feutre avec apport de fibres thermoplastiques en polyéthylène. Cet aiguilletage en profondeur des non-tissés selon l'invention sans apport de matériau thermoplastique (e.g. sans apport de polyoléfine telle que du polyéthylène ou de tout autre polymère thermoplastique) permet d'obtenir une tenue mécanique satisfaisante des non-tissés en les reliant entre eux tout en remédiant à l'inconvénient précité de ce document inhérent à l'utilisation de fibres d'aiguilletage polyoléfiniques susceptibles de fondre lors de l'expansion/ réticulation de la matrice thermodurcissable.

Avantageusement, lesdits plusieurs non-tissés superposés peuvent comprendre au moins trois et de préférence quatre dits non-tissés.

Selon un premier mode de réalisation de l'invention, ces non-tissés superposés sont aiguilletés avec apport de fibres continues de basalte.

Conformément à ce premier mode, lesdites fibres continues de basalte peuvent former des fils de chaîne parallèles insérés dans lesdits non-tissés superposés, lesdits fils de chaîne étant deux à deux espacés entre eux d'une distance de préférence comprise entre 10 cm et 40 cm et, à titre encore plus préférentiel, comprise entre 15 cm et 25 cm.

Avantageusement, ces fibres continues de basalte peuvent présenter une masse linéique comprise entre 100 tex et 300 tex, de préférence entre 180 et 230 tex, et répondent de préférence à la dénomination « BCF ».

On notera que ces fibres continues de basalte permettent d'améliorer la résistance dudit support dans le sens de la longueur (i,e. de la direction des fils de chaîne).

Egalement conformément à ce premier mode, lesdits non-tissés superposés peuvent être chacun constitués (i.e. exclusivement) de ces fibres courtes de basalte et de ces fibres continues de basalte, et peuvent présenter chacun une masse surfacique comprise entre 480 et 2000 g/m².

Selon un second mode de réalisation de l'invention, lesdits non-tissés superposés présentent chacun une masse surfacique supérieure à 1000 g/m² et sont aiguilletés sans apport d'aucunes fibres.

Conformément à ce second mode, lesdits non-tissés superposés peuvent ainsi être chacun constitués (i.e. exclusivement) desdites fibres courtes de basalte.

Avantageusement. ledit au moins un support imprégné par ladite matrice thermodurcissable peut comprendre lesdits non-tissés superposés selon une fraction massique comprise entre 15 et 25 % et ladite matrice selon une fraction massique comprise entre 75 et 85 %.

Egalement avantageusement, la matrice thermodurcissable peut comprendre (en fractions massiques) :
- entre 50 et 65 % d'une résine en base aqueuse choisie dans le groupe constitué par les résines mélamine-formaldéhyde, les résines phénoliques et les colles à bois et de préférence mélamine-formaldéhyde ;
- entre 3 et 15 % d'un agent d'expansion pour la formation de cellules ouvertes qui comprend de préférence de l'isobutane (pour des températures de pressage inférieures à 150° C) ou de l'isopentane (pour des températures de pressage supérieures à 150° C) :
- entre 0,5 et 2 % d'un catalyseur comprenant de préférence de l'hydrochlorure d'amine ;
- entre 30 et 45 % d'un solvant aqueux tel que de l'eau ; et
- entre 0 et 3 % d'additifs optionnels tels que des broyats de carbone ou du graphite, par exemple.

Selon une autre caractéristique de l'invention, lesdits non-tissés superposés et imprégnés par ladite matrice thermodurcissable peuvent présenter une masse volumique comprise entre 60 kg/m³ et 1200 kg/m³ et une épaisseur comprise entre 5 mm et 30 mm.

Avantageusement, ledit panneau peut comprendre en outre :
- au moins une feuille d'aluminium située à l'extérieur desdits non-tissés superposés dudit au moins un support, par exemple située entre deux dits supports chacun constitués desdits non-tissés superposés, et/ou
- une couche externe formant un revêtement de protection du panneau qui est choisie dans le groupe constitué par les caoutchoucs, les élastomères thermoplastiques, les peintures époxy et les polyuréthanes.

On notera que cette couche externe est par exemple destinée à former une couche supérieure d'une structure de revêtement d'une paroi ou substrat selon l'invention définissant la surface externe d'un plancher. plateforme, pont ou coque sur laquelle peuvent évoluer des opérateurs.

Avantageusement, ledit panneau peut présenter :
- une conductivité thermique à 25° C inférieure ou égale à 50 mW.m⁻¹K⁻¹ (avantageusement à 35 mW.m⁻¹K⁻¹), lui conférant notamment une bonne isolation thermique aux fluides cryogéniques de sorte que la température du substrat sous-jacent ne soit pas plus basse que -60° C, et/ou
- une étanchéité à des fluides cryogéniques permettant d'éviter tout contact de ces fluides avec le substrat sous-jacent, et/ou
- une résistance passive au feu incluant :
   * une allumabilité de classe CFL-S1, d'après la norme NF EN 13501-1,
   * une résistance à la propagation de flammes inférieure à 25, mesurée d'après la norme ASTM E84,
   * un indice d'émissivité de fumées inférieur à 130, mesuré d'après la norme ASTM E84, et
   * une isolation thermique au feu garantissant une température du substrat sous-jacent pas plus élevée que 427° C.

On notera que les panneaux de l'invention présentent l'avantage d'être transparents aux hyperfréquences, incluant la fréquence spécifique de l'eau (entre 1000 et 1100 MHz), et d'être aisément réparables.

Une structure de revêtement selon l'invention d'une paroi destinée à conférer à ladite paroi une isolation thermique vis-à-vis de fluides cryogéniques et/ou une protection contre le feu et des flammes et/ou une étanchéité à ces fluides, la structure étant en particulier adaptée pour revêtir une plateforme, un pont ou coque d'une unité flottante de production de gaz liquéfié en offshore, est telle que la structure comprend un assemblage de dits panneaux destiné à être fixé à la paroi, les panneaux étant reliés entre eux par des moyens de jonction étanches comprenant de préférence des cordons composites à base de fibres courtes de basalte imprégnées d'une matrice thermodurcissable cellulaire identique ou différente de celle des panneaux.

On notera que les structures de revêtement selon l'invention peuvent concerner le revêtement de toute paroi ou substrat sous-jacent, que cette paroi soit par exemple horizontale (la structure forme alors un dallage formé d'un assemblage de dalles par exemple polygonales), verticale ou autre, et que ces structures peuvent par exemple protéger des parois telles que des murs ou des cloisons contre des incendies. En variante, ces structures peuvent protéger des bâtiments, des appareillages industriels (incluant des conduites ou cuves cryogéniques thermiquement isolées), et des véhicules terrestres, ferroviaires, maritimes, fluviaux, aériens ou spatiaux.

Un procédé de fabrication selon l'invention d'un dit panneau selon l'invention est tel qu'il comprend les étapes successives suivantes :
a) aiguilletage desdits non-tissés superposés dudit au moins un support dans ladite épaisseur de superposition sans apport de fibres thermoplastiques, de préférence avec apport de fibres continues de basalte,
b) imprégnation par ladite matrice des non-tissés aiguilletés,
c) calandrage desdits non-tissés imprégnés,
d) séchage desdits non-tissés imprégnés et calandrés, puis
e) pressage desdits non-tissés imprégnés, calandrés et séchés entre des plateaux chauffants à écartement contrôlé.

D'autres caractéristiques, avantages et détails de la présente invention ressortiront à la lecture de la description suivante de plusieurs exemples de réalisation de l'invention, donnés à titre illustratif et non limitatif, la description étant réalisée en référence aux dessins joints, parmi lesquels :
La figure 1 est une vue schématique partielle en section transversale d'un support inclus dans un panneau selon un exemple de l'invention conforme audit premier mode, montrant la mise en oeuvre de l'aiguilletage appliqué au support avant son imprégnation par la matrice thermodurcissable,
La figure 2 est une vue schématique partielle en section transversale du support de la figure 1 aiguilleté et imprégné par la matrice,
La figure 3 est une vue partielle en perspective d'un panneau selon l'invention montrant une tranche longitudinale rainurée de ce panneau destinée à recevoir un moyen de jonction avec un autre panneau,
La figure 4 est une vue partielle en perspective de détail montrant la tranche du panneau de la figure 3 assemblée à celle d'un autre panneau par interposition de ce moyen de jonction, et
La figure 5 est une vue partielle de dessus et en perspective agrandie de l'assemblage de la figure 4.

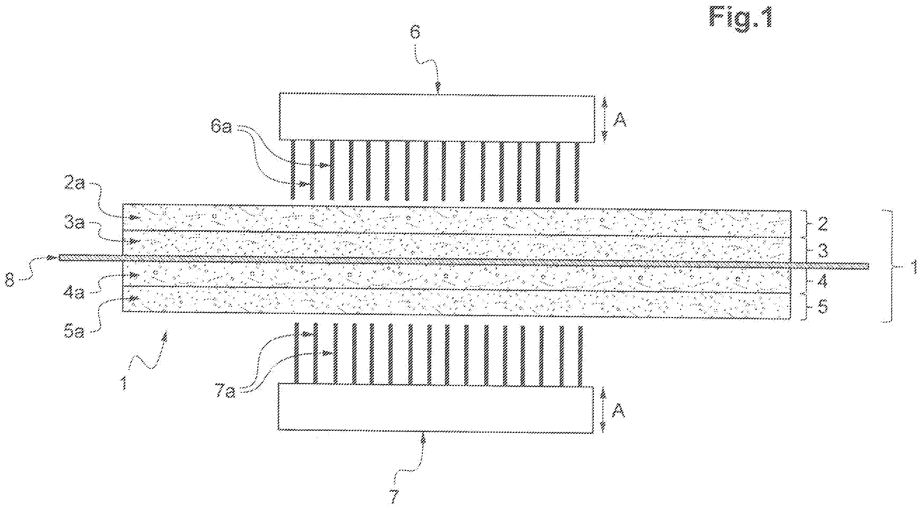

Le support 1 selon l'exemple de l'invention visible en cours de fabrication à la figure 1 comprend quatre non-tissés 2. 3, 4, 5 superposés par exemple de type feutres qui, illustrés avant leur aiguilletage par des outils 6 et 7 munis d'aiguilles 6a et 7a, sont majoritairement ou exclusivement constitués de fibres courtes de basalte 2a, 3a, 4a, 5a sensiblement de type « TBF ». De préférence, les fibres 2a, 3a, 4a, 5a peuvent avantageusement présenter un diamètre moyen d'environ 13 µm et une longueur moyenne d'environ 40 mm.

Dans l'exemple de la figure 1, les fibres 2a, 3a. 4a, 5a sont représentées de manière purement schématique, étant précisé qu'une orientation plus ou moins aléatoire des fibres 2a-5a est également envisageable pour chacun des non-tissés 2-5.

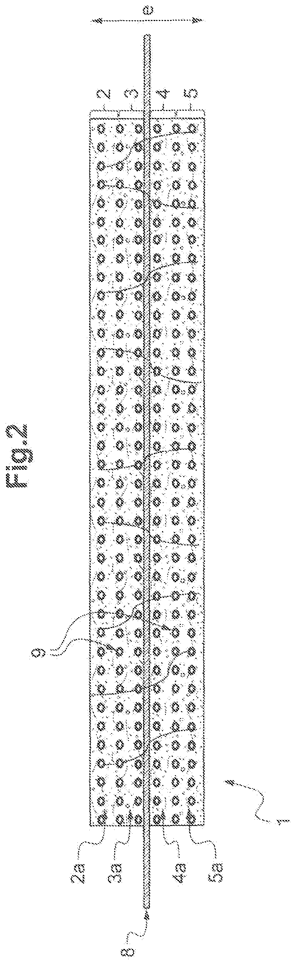

Après aiguilletage en profondeur des non-tissés 2-5 obtenu par des mouvements alternatifs des outils 6 et 7 dans le sens des doubles flèches A de sorte que les aiguilles 6a et 7a traversent chacune l'épaisseur totale de superposition des non-tissés 2-5 avec apport, selon ce premier mode de l'invention, de fibres longues (i.e. sensiblement continues) de basalte de classe « BCF » pour former des fils de chaîne 8, on a obtenu le support aiguilleté visible partiellement à la figure 1 et de manière achevée à la figure 2 avec insertion des fils de chaîne continus 8 en basalte (un seul est visible à ces figures) suivant des espacements entre fils de chaîne 8 consécutifs compris entre 10 cm et 40 cm et avantageusement de l'ordre de 20 cm. A titre de fibres d'apport de type « BCF » utilisées pour cet aiguilletage, on a avantageusement utilisé des fils de titre inférieur ou égal à 230 tex et de préférence égal à 180 tex, ces fils longs ou continus présentant un diamètre moyen compris entre 6 µm et 21 µm.

La masse surfacique ou grammage de l'empilement de non-tissés 2-5 aiguilletés via les fibres continues 8 est avantageusement comprise entre 480 et 1000 g/m² en incluant 780 g/m², étant précisé que dans ce mode de réalisation de la figure 2 les non-tissés 2-5 superposés sur une épaisseur e sont constitués de fibres de basalte, comprenant les fibres courtes 2a-5a à titre majoritaire et les fils continus 8 à titre minoritaire (en masse).

Comme indiqué précédemment dans l'exposé général de la présente invention, on notera qu'il est possible en variante de réaliser cet aiguilletage des non-tissés 2-5 sans apport de fibres, ces non-tissés 2-5 étant alors uniquement constitués des seules fibres courtes de basalte 2a-5a.

Suite à cet aiguilletage, on a imprégné les non-tissés 2-5 par une matrice thermodurcissable 9 à base (i.e. majoritairement constituée en masse) d'une résine thermodurcissable en base aqueuse de préférence constituée d'un copolymère de mélamine-formaldéhyde (avec un taux massique de formaidéhydes de l'ordre de 0,2.10⁻¹ % seulement).

Le tableau 1 ci-après détaille un exemple de formulation testée pour le support 1 constitué des non-tissés 2-5 aiguilletés et pour la composition de la matrice thermodurcissable 9 imprégnant ce support 1.

**Tableau 1 :**

| Ingrédients | Fraction massique dans l'ensemble du support 1 et de la matrice 9 |
|---|---|
| **Support non tissé 1** | **20** |
| **Matrice thermodurcissable 9** | **80** |
| Résine mélamine-formaldéhyde | 45 |
| Agent d'expansion (isobutane) | 3 |
| Catalyseur (hydrochlorure d'amine) | 1 |
| Eau | 31 |

Pour fabnquer des panneaux composites 10 selon l'invention à partir du support non tissé 1 imprégné par cette matrice 9, on a procédé comme suit, suivant un exemple de réalisation de l'invention.

Dans une première étape, on a procédé au calandrage du support 1 imprégné de la matrice 9 pour contrôler la proportion relative entre ce support 1 et cette matrice 9.

Dans une seconde étape, on a procédé au séchage du support 1 imprégné de la matrice 9 et calandré comme suit :
- Evaporation d'une partie de l'eau du support 1 pendant 2 heures ;
- Condensation de l'eau évaporée pendant 2 heures ;
- Evacuation en continu de l'eau condensée ; puis
- Répétition de ces deux cycles d'évaporation et de condensation pendant une durée allant de 24 heures à 48 heures.

Dans une troisième étape, on a procédé au pressage du support 1 à l'état sec entre deux plateaux chauffants avec écartement contrôlé, comme suit :
- cycle de 8 minutes à 120° C avec un effort de 300 kN sur les plateaux ;
- cycle de 30 secondes à 0 kN (décompression) ;
- cycle de 7 minutes à 120° C avec un effort de 300 kN sur les plateaux ; puis
- Refroidissement du produit sur une surface plane pendant 30 minutes.

On notera qu'il est envisageable, dans le cadre du procédé de fabrication d'un panneau 10 selon l'invention, de presser :
- un ou plusieurs supports non tissés 1 ensemble dans un même cycle, ou bien en variante
- n supports 1 l'un après l'autre (i.e. en n cycles), avec n entier inclusivement compris entre 2 et 5 (dans ce cas, les différents supports 1 peuvent avoir la même épaisseur ou pas).

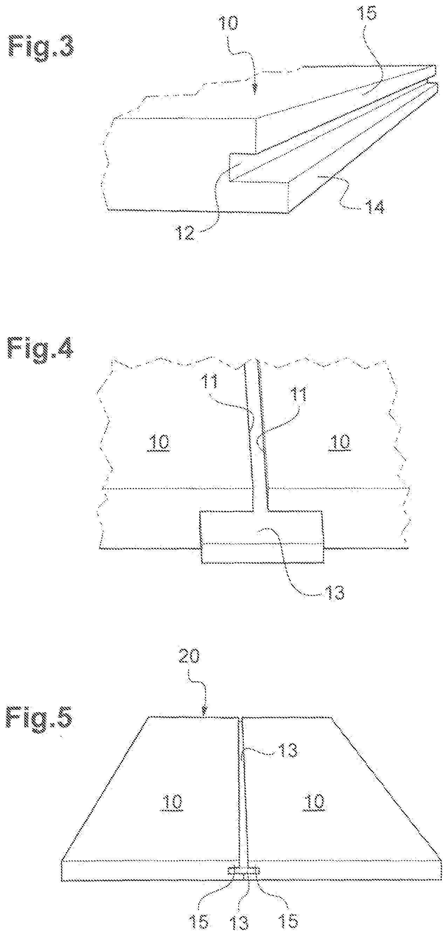

On a ainsi obtenu des panneaux composites 10 selon l'invention qui étaient chacun formés d'une dalle rectangulaire, comme illustré aux figures 3 à 5, étant précisé que l'on peut en variante obtenir des panneaux 10 de géométrie carrée ou autrement polygonale. Les superficies maximales obtenues pour ces panneaux 10 de l'invention, qui étaient limitées aux surfaces des presses utilisées, étaient dans ces exemples de réalisation comprises entre 0,5 m² et 6 m². De plus, ces panneaux 10 présentaient chacun une masse volumique qui était comprise entre 60 kg/m³ et 1200 kg/m³ et qui pouvait varier ou non à la surface de chaque panneau 10, pour une épaisseur de panneau 10 comprise entre 5 mm et 30 mm.

On a soumis les panneaux 10 aux essais précités, avec notamment comme résultats obtenus une conductivité thermique à 25° C inférieure ou égale à 35 mW.m⁻¹K⁻¹, une étanchéité aux fluides cryogéniques et une résistance passive au feu satisfaisantes (mesurée par ladite allumabilité, ladite résistance à la propagation de flamme, ledit indice d'émissivité de fumées et ladite isolation thermique au feu).

Comme illustré aux figures 3 à 5, on a ménagé dans chacun des deux chants longitudinaux 11 de chaque panneau 10 une rainure longitudinale 12 recevant un cordon composite de jonction 13 étanche pour l'obtention d'une structure de revêtement 20 d'une paroi selon l'invention. Chaque cordon 13 était à base des mêmes fibres courtes de basalte que celles 2a-5a des non-tissés 2-5 imprégnées de la même matrice thermodurcissable cellulaire que la matrice 9 ayant servi à l'imprégnation des non-tissés 2 à 5 (étant précisé que l'on peut utiliser en variante un cordon composite cellulaire 13 à base d'un support et/ou d'une matrice d'imprégnation autre(s) que ceux de chaque panneau 10).

Dans l'exemple des figures 3 à 5, chaque rainure 12 présente une section transversale en U asymétrique, i.e. délimitée par un bord 14 (inférieur sur ces figures) plus large que l'autre bord 15 (supérieur sur ces figures), de sorte que lors de l'aboutement de deux panneaux 10 dans un même plan par les deux bords des rainures 12 positionnées en regard l'une de l'autre, les bords inférieurs plus larges 14 sont sensiblement en butée l'un contre l'autre et les bords supérieurs moins larges 15 sont espacés l'un de l'autre. Chaque cordon de jonction 13 présente ainsi en section transversale sensiblement une forme de T (i.e. un T inversé dont le sommet remplit les deux rainures 12 en regard et dont le jambage prolonge de manière continue ce sommet entre les deux bords supérieurs 15 espacés sur toute la longueur des panneaux 10 en affleurant les surfaces adjacentes des panneaux 10).

On notera qu'il est ainsi possible d'obtenir une structure de revêtement 20 modulaire de superficie variable qui est adaptée à celle de la paroi sous-jacente à protéger.

## Revendications

1. Panneau composite (10) à matrice thermodurcissable cellulaire (9), le panneau comprenant au moins un support (1) qui comprend des fibres courtes de basalte non tissées (2a, 3a, 4a, 5a) et qui est imprégné par ladite matrice, **caractérisé en ce que** ledit au moins un support comprend plusieurs non-tissés (2, 3, 4, 5) superposés suivant une épaisseur de superposition (e), lesdits non-tissés comprenant chacun lesdites fibres courtes de basalte et étant aiguilletés dans ladite épaisseur sans apport de fibres thermoplastiques.

2. Panneau (10) selon la revendication 1, **caractérisé en ce que** lesdits plusieurs non-tissés (2, 3, 4, 5) superposés comprennent au moins trois et de préférence quatre dits non-tissés.

3. Panneau (10) selon la revendication 1 ou 2, **caractérisé en ce que** lesdits non-tissés (2, 3, 4, 5) superposés sont aiguilletés avec apport de fibres continues de basalte (8).

4. Panneau (10) selon la revendication 3, **caractérisé en ce que** lesdites fibres continues de basalte (8) forment des fils de chaîne parallèles insérés dans lesdits non-tissés (2, 3, 4, 5) superposés, lesdits fils de chaîne étant deux à deux espacés entre eux d'une distance de préférence comprise entre 10 cm et 40 cm.

5. Panneau (10) selon la revendication 4, **caractérisé en ce que** lesdites fibres continues de basalte (8) présentent une masse linéique comprise entre 100 tex et 300 tex et répondent de préférence à la dénomination « BCF ».

6. Panneau (10) selon une des revendications 3 à 5, **caractérisé en ce que** lesdits non-tissés (2, 3, 4, 5) superposés sont chacun constitués desdites fibres courtes de basalte (2a, 3a, 4a, 5a) et desdites fibres continues de basalte (8).

7. Panneau (10) selon une des revendications précédentes, **caractérisé en ce que** lesdits non-tissés (2, 3, 4, 5) superposés présentent chacun une masse surfacique comprise entre 480 g/m² et 2000 g/m².

8. Panneau (10) selon la revendication 1 ou 2, **caractérisé en ce que** lesdits non-tissés (2, 3, 4, 5) superposés présentent chacun une masse surfacique supérieure à 1000 g/m² et sont aiguilletés sans apport d'aucunes fibres,

9. Panneau (10) selon la revendication 8, **caractérisé en ce que** lesdits non-tissés (2, 3, 4, 5) superposés sont chacun constitués desdites fibres courtes de basalte (2a, 3a, 4a, 5a).

10. Panneau (10) selon une des revendications précédentes, **caractérisé en ce que** lesdites fibres courtes de basalte (2a, 3a, 4a, 5a) présentent un diamètre moyen compris entre 13 µm et 16 µm et une longueur moyenne comprise entre 30 mm et 60 mm.

11. Panneau (10) selon une des revendications précédentes, **caractérisé en ce que** ledit au moins un support (1) imprégné par ladite matrice thermodurcissable (9) comprend lesdits non-tissés (2, 3, 4, 5) superposés selon une fraction massique comprise entre 15 et 25 % et ladite matrice selon une fraction massique comprise entre 75 et 85 %.

12. Panneau (10) selon une des revendications précédentes, **caractérisé en ce que** ladite matrice thermodurcissable (9) comprend :
- selon une fraction massique comprise entre 50 et 65 %, une résine en base aqueuse choisie dans le groupe constitué par les résines mélamine-formaldéhyde, les résines phénoliques et les colles à bois et qui est de préférence une résine mélamine-formaldéhyde :
- selon une fraction massique comprise entre 3 et 15 %, un agent d'expansion pour la formation de cellules ouvertes qui comprend de préférence de l'isobutane ou de l'isopentane ;
- selon une fraction massique comprise entre 0,5 et 2 %, un catalyseur comprenant de préférence de l'hydrochlofure d'amine ; et
- selon une fraction massique comprise entre 30 et 45 %, un solvant aqueux tel que de l'eau.

13. Panneau (10) selon une des revendications précédentes, **caractérisé en ce que** lesdits non-tissés (2, 3, 4, 5) superposés et imprégnés par ladite matrice thermodurcissable (9) présentent une masse volumique comprise entre 60 kg/m³ et 1200 kg/m³ et une épaisseur comprise entre 5 mm et 30 mm.

14. Panneau (10) selon une des revendications précédentes, **caractérisé en ce que** le panneau comprend en outre :
- au moins une feuille d'aluminium située à l'extérieur desdits non-tissés superposés dudit au moins un support (1), et/ou
- une couche externe formant un revêtement de protection du panneau qui est choisie dans le groupe constitué par les caoutchoucs, les élastomères thermoplastiques, les peintures époxy et les polyurèthanes.

15. Panneau (10) selon une des revendications précédentes, **caractérisé en ce que** le panneau présente une conductivité thermique inférieure ou égale à 50 mW.m⁻¹K⁻¹ et/ou une étanchéité à des fluides cryogéniques et/ou une résistance au feu et aux flammes.

16. Structure de revêtement (20) d'une paroi destinée à conférer à ladite paroi une isolation thermique vis-à-vis de fluides cryogéniques et/ou une protection contre le feu et des flammes et/ou une étanchéité auxdits fluides cryogéniques, la structure étant en particulier adaptée pour revêtir une plateforme, un pont ou une coque d'une unité flottante de production de gaz liquéfié en offshore,
**caractérisée en ce que** la structure comprend un assemblage de panneaux (10) selon une des revendications précédentes qui est destiné à être fixé à ladite paroi, les panneaux étant reliés entre eux par des moyens de jonction étanches (13) comprenant de préférence des cordons composites à base de fibres courtes de basalte (2a, 3a, 4a, 5a) imprégnées d'une matrice thermodurcissable cellulaire (9) identique ou différente de celle desdits panneaux.

17. Procédé de fabrication d'un panneau (10) selon une des revendications 1 à 15, **caractérisé en ce que** le procédé comprend les étapes successives suivantes :
a) aiguilletage desdits non-tissés (2, 3, 4, 5) superposés dudit au moins un support (1) dans ladite épaisseur de superposition (e) sans apport de fibres thermoplastiques, de préférence avec apport de fibres continues de basalte (8),
b) imprégnation par ladite matrice thermodurcissable (9) desdits non-tissés superposés et aiguilletés,
c) calandrage desdits non-tissés imprégnés,
d) séchage desdits non-tissés imprégnés et calandrés, puis
e) pressage desdits non-tissés imprégnés, calandrés et séchés entre des plateaux chauffants à écartement contrôlé.

## Patentansprüche

1. Verbundplatte (10) mit einer zellulären wärmehärtenden Matrix (9), wobei die Platte mindestens einen Träger (1) umfasst, der kurze Nonwoven-Basaltfasern (2a, 3a, 4a, 5a) umfasst und mit der Matrix imprägniert ist, **dadurch gekennzeichnet, dass** der mindestens eine Träger eine Vielzahl von gemäß einer Überlagerungsdicke (e) übereinander angeordneten Nonwovens (2, 3, 4, 5) umfasst, wobei die Nonwovens jeweils die kurzen Basaltfasern umfassen und in der Dicke ohne Zugabe von thermoplastischen Fasern vernadelt sind.

2. Platte (10) nach Anspruch 1, **dadurch gekennzeichnet, dass** die Vielzahl von übereinander angeordneten Nonwovens (2, 3, 4, 5) mindestens drei, vorzugsweise vier Nonwovens umfassen.

3. Platte (10) nach Anspruch 1 oder 2, **dadurch gekennzeichnet, dass** die übereinander angeordneten Nonwovens (2, 3, 4, 5) unter Zugabe von fortlaufenden Basaltfasern (8) vernadelt sind.

4. Platte (10) nach Anspruch 3, **dadurch gekennzeichnet, dass** die fortlaufenden Basaltfasern (8) zueinander parallele Kettfäden bilden, die in die übereinander angeordneten Nonwovens (2, 3, 4, 5) eingebunden sind, wobei die Kettfäden paarweise in Abständen von vorzugsweise 10 cm bis 40 cm zueinander beabstandet sind.

5. Platte (10) nach Anspruch 4, **dadurch gekennzeichnet, dass** die fortlaufenden Basaltfasern (8) eine lineare Dichte zwischen 100 tex und 300 tex aufweisen und vorzugsweise der Bezeichnung "BCF" entsprechen.

6. Platte (10) nach einem der Ansprüche 3 bis 5, **dadurch gekennzeichnet, dass** die übereinander angeordneten Nonwovens (2, 3, 4, 5) jeweils aus den kurzen Basaltfasern (2a, 3a, 4a, 5a) und den fortlaufenden Basaltfasern (8) bestehen.

7. Platte (10) nach einem der vorhergehenden Ansprüche, **dadurch gekennzeichnet, dass** die übereinander angeordneten Nonwovens (2, 3, 4, 5) jeweils eine flächenbezogene Masse zwischen 480 g/m² und 2.000 g/m² aufweisen.

8. Platte (10) nach Anspruch 1 oder 2, **dadurch gekennzeichnet, dass** die übereinander angeordneten Nonwovens (2, 3, 4, 5) jeweils eine flächenbezogene Masse von über 1.000 g/m² aufweisen und ohne Zugabe von weiteren Fasern vernadelt sind.

9. Platte (10) nach Anspruch 8, **dadurch gekennzeichnet, dass** die übereinander angeordneten Nonwovens (2, 3, 4, 5) jeweils aus den kurzen Basaltfasern (2a, 3a, 4a, 5a) bestehen.

10. Platte (10) nach einem der vorhergehenden Ansprüche, **dadurch gekennzeichnet, dass** die kurzen Basaltfasern (2a, 3a, 4a, 5a) einen durchschnittlichen Durchmesser zwischen 13 µm und 16 µm und eine durchschnittliche Länge zwischen 30 mm und 60 mm aufweisen.

11. Platte (10) nach einem der vorhergehenden Ansprüche, **dadurch gekennzeichnet, dass** der mindestens eine Träger (1), der mit der wärmehärtenden Matrix (9) imprägniert ist, die übereinander angeordneten Nonwovens (2, 3, 4, 5) in einem Massenanteil zwischen 15 und 25 % und die Matrix in einem Massenanteil zwischen 75 und 85 % umfasst.

12. Platte (10) nach einem der vorhergehenden Ansprüche, **dadurch gekennzeichnet, dass** die wärmehärtende Matrix (9) umfasst:
- in einem Massenanteil zwischen 50 und 65 %, ein Harz in wässrigem Medium, das aus der Gruppe ausgewählt ist, die aus Melamin-Formaldehydharzen, Phenolharzen und Holzklebstoffen besteht und bei dem es sich vorzugsweise um ein Melamin-Formaldehydharz handelt;
- in einem Massenanteil zwischen 3 und 15 %, ein Expansionsmittel zur Bildung offener Zellen, das vorzugsweise Isobutan oder Isopentan enthält;
- in einem Massenanteil zwischen 0,5 und 2 %, einen Katalysator, der vorzugsweise Aminhydrochlorid enthält; und
- in einem Massenanteil zwischen 30 und 45 %, ein wässriges Lösungsmittel wie beispielsweise Wasser.

13. Platte (10) nach einem der vorhergehenden Ansprüche, **dadurch gekennzeichnet, dass** die übereinander angeordneten und mit der wärmehärtenden Matrix (9) imprägnierten Nonwovens (2, 3, 4, 5) eine Volumenmasse zwischen 60 kg/m³ und 1.200 kg/m³ und eine Dicke zwischen 5 mm und 30 mm besitzen.

14. Platte (10) nach einem der vorhergehenden Ansprüche, **dadurch gekennzeichnet, dass** die Platte weiter umfasst:
- mindestens eine Aluminiumfolie, die sich außerhalb der übereinander angeordneten Nonwovens des mindestens einen Trägers (1) befindet und/oder
- eine Außenschicht, die eine schützende Beschichtung der Platte bildet, die aus der Gruppe ausgewählt ist, die aus Kautschuken, thermoplastischen Elastomeren, Epoxidfarben und Polyurethanen besteht.

15. Platte (10) nach einem der vorhergehenden Ansprüche, **dadurch gekennzeichnet, dass** die Platte eine Wärmeleitfähigkeit von weniger oder gleich 50 mW.m⁻¹K⁻¹ und/oder eine Dichtigkeit gegenüber kryogenen Flüssigkeiten und/oder Feuer- und Flammbeständigkeit aufweist.

16. Beschichtungsstruktur (20) einer Wand, die dazu bestimmt ist, der Wand eine Wärmeisolierung in Bezug auf kryogene Flüssigkeiten und/oder einen Schutz gegen Feuer und Flammen und/oder eine Dichtigkeit gegenüber kryogenen Flüssigkeiten zu verleihen, wobei die Struktur insbesondere zur Beschichtung einer Plattform, eines Decks oder eines Rumpfes einer schwimmenden Offshore-Anlage zur Herstellung von Flüssiggas angepasst ist,
**dadurch gekennzeichnet, dass** die Struktur einen Verbund von Platten (10) nach einem der vorhergehenden Ansprüche umfasst, der an der Wand befestigt werden soll, wobei die Platten durch abgedichtete Verbindungsmittel (13) miteinander verbunden sind, die vorzugsweise Verbundschnüre basierend auf kurzen Basaltfasern (2a, 3a, 4a, 5a) umfassen, die mit einer zellulären wärmehärtenden Matrix (9) imprägniert sind, die identisch oder verschieden von der der Platten ist.

17. Verfahren zur Herstellung einer Platte (10) nach einem der Ansprüche 1 bis 15, **dadurch gekennzeichnet, dass** das Verfahren die folgenden aufeinanderfolgenden Schritte umfasst:
a) Vernadeln der übereinander angeordneten Nonwovens (2, 3, 4, 5) des mindestens einen Trägers (1) innerhalb der Überlagerungsdicke (e) ohne Zugabe von thermoplastischen Fasern, vorzugsweise unter Zugabe von fortlaufenden Basaltfasern (8),
b) Imprägnieren der übereinander angeordneten und vernadelten Nonwovens mit der wärmehärtenden Matrix (9),
c) Kalandrieren der imprägnierten Nonwovens,
d) Trocknen der imprägnierten und kalandrierten Nonwovens, und schließlich
e) Pressen der imprägnierten, kalandrierten und getrockneten Nonwovens zwischen Heizplatten mit kontrolliertem Abstand.

## Claims

1. Composite panel (10) with thermosetting cellular matrix (9), the panel comprising at least one support (1) which comprises short unwoven basalt fibres (2a, 3a, 4a, 5a) and impregnated by said matrix, **characterized in that** said at least one support includes several unwoven (2, 3, 4, 5) superimposed over a superimposition thickness (e), said unwoven each comprising said short basalt fibres and being needled in said thickness, without added thermoplastic fibres.

2. Panel (10) according to claim 1, **characterized in that** said several superimposed unwoven (2, 3, 4, 5) comprise at least three, and preferably four said unwoven.

3. Panel (10) according to claim 1 or 2, **characterized in that** said superimposed unwoven (2, 3, 4, 5) are needled with added continuous basalt fibres (8).

4. Panel (10) according to claim 3, **characterized in that** said continuous basalt fibres (8) form parallel chain strands inserted in said superimposed unwoven (2, 3, 4, 5), said chain strands being spaced in pairs with a spacing distance preferably ranging from 10 cm to 40 cm.

5. Panel (10) according to claim 4, **characterized in that** said continuous basalt fibres (8) present a linear density ranging from 100 tex to 300 tex, and preferably fulfill the "BCF" denomination.

6. Panel (10) according to one of the claims 3 to 5, **characterized in that** said superimposed unwoven (2, 3, 4, 5) are each made of said short basalt fibres (2a, 3a, 4a, 5a) and of said continuous basalt fibres (8).

7. Panel (10) according to one of the preceding claims, **characterized in that** said superimposed unwoven (2, 3, 4, 5) each present an area density ranging from 480 g/m² to 2000 g/m².

8. Panel (10) according to claim 1 or 2, **characterized in that** said superimposed unwoven (2, 3, 4, 5) each present an area density greater than 1000 g/m² and are needled without added fibres.

9. Panel (10) according to claim 8, **characterized in that** said superimposed unwoven (2, 3, 4, 5) are each made of said short basalt fibres (2a, 3a, 4a, 5a).

10. Panel (10) according to one of the preceding claims, **characterized in that** said short basalt fibres (2a, 3a, 4a, 5a) present an average diameter ranging from 13 µm to 16 µm and an average length ranging from 30 mm to 60 mm.

11. Panel (10) according to one of the preceding claims, **characterized in that** said at least one support (1) impregnated by said thermosetting matrix (9) comprises said superimposed unwoven (2, 3, 4, 5) in a mass fraction ranging from 15 to 25 %, and said matrix in a mass fraction ranging from 75 to 85 %.

12. Panel (10) according to one of the preceding claims, **characterized in that** said thermosetting matrix (9) comprises:
- in a mass fraction ranging from 50 to 65 %, an aqueous base resin chosen from the group of melamine-formaldehyde resins, phenolic resins and wood adhesives, and preferably a melamine-formaldehyde resin;
- in a mass fraction ranging from 3 to 15 %, a blowing agent for the formation of open cells and preferably comprising isobutane or isopentane;
- in a mass fraction ranging from 0.5 to 2 %, a catalyst preferably comprising amine hydrochloride; and
- in a mass fraction ranging from 30 to 45 %, an aqueous solvent such as water.

13. Panel (10) according to one of the preceding claims, **characterized in that** said superimposed unwoven (2, 3, 4, 5) impregnated by said thermosetting matrix (9) present a density ranging from 60 kg/m³ to 1200 kg/m³, and a thickness ranging from 5 mm to 30 mm.

14. Panel (10) according to one of the preceding claims, **characterized in that** the panel also comprises:
- at least one aluminium sheet located outside said superimposed unwoven of said at least one support (1), and/or
- an external layer forming a protective coating of the panel, chosen from the group of rubbers, thermoplastic elastomers, epoxy paints and polyurethanes.

15. Panel (10) according to one of the preceding claims, **characterized in that** the panel presents a thermal conductivity of 50 mW.m⁻¹K⁻¹ or less, and/or tightness to cryogenic fluids and/or fire and flame resistance.

16. Coating structure (20) for a wall, intended to provide said wall with thermal insulation with respect to cryogenic fluids and/or with protection from fire and flames and/or with tightness to said cryogenic fluids, the structure being particularly adapted to coat a platform, a bridge or a hull of a floating offshore unit for the production of liquefied gas,
**characterized in that** the structure comprises an assembly of panels (10) according to one of the preceding claims which is intended to be secured to said wall, the panels being interconnected by sealed connection means (13) that preferably comprise composite beads based on short basalt fibres (2a, 3a, 4a, 5a) impregnated with a cellular thermosetting matrix (9) identical to or different from that of said panels.

17. Method for manufacturing a panel (10) according to one of the claims 1 to 15, **characterized in that** the method comprises the following successive steps:
a) needling of said superimposed unwoven (2, 3, 4, 5) of said at least one support (1) in said superimposition thickness (e) without addition of thermoplastic fibres, preferably with the addition of continuous basalt fibres (8),
b) impregnation by said thermosetting matrix (9) of said superimposed and needled unwoven,
c) calendering of said impregnated unwoven,
d) drying of said impregnated and calendered unwoven, then
e) pressing of said impregnated unwoven, calendered and dried between heating plates with controlled spacing.
